# EUROPEAN PATENT APPLICATION

(11) **EP 3 045 614 A1**
(43) Date of publication of application: **20.07.2016**
(21) Application number: 15201563.2
(22) Date of filing: 21.12.2015
(51) Int. Cl.: E04G 21/18, H02G 3/12, B28B 23/00

(54) **ASSEMBLY TOOL AND METHOD FOR ALIGNING A MOUNTING BOX IN A MOULD**

(30) Priority: 23.12.2014 BE 201405151
(71) Applicant: Niko NV, 9100 Sint-Niklaas (BE)
(72) Inventor: Cooreman, Tom, 9310 Meldert (Aalst) (BE)
(74) Representative: D'Halleweyn, Nele Veerle Trees Gertrudis

(57) **Abstract**

The present invention provides an assembly tool (10) for aligning a mounting box (20) comprising in a mould. The assembly tool (10) comprises an enclosure part (1) for enclosing at least one mounting box (20) and at least two protrusions (2) fixed to and extending from the enclosure part (1), the protrusions (2) being intended for leaning on a bottom (22) of the mould (21) and having a length (L) equal to a predetermined distance between a lower part (23) of the mould (21) and a location of the at least one mounting box (20) in the mould (21). A predetermined distance (d, d', d'') is provided between neighbouring protrusions (2) for fitting cable trays (19) of the mounting box (20) and connection means (24) is provided for connecting rigid conduits (25) in these cable trays (19).

## Description

### Technical field of the invention

The present invention relates to an assembly tool and a method for aligning a mounting box in a mould during the manufacturing process of a prefabricated or prefab wall.

### Background of the invention

Mounting boxes for building into a wall are well known in the art. They have as an advantage that an electric or electronic functional module such as a socket, a switch, a network termination point, a USB connection and the like, can be safely built into a wall, whereby the necessary cable connections are realized in the mounting box, so that after building in, only a small volume of the functional module will be outside the volume of the wall itself. Such mounting boxes have, however, the disadvantage that an electrician has to perform a relatively large amount of work on the construction site, such as pulling cables, connecting these cables, mounting the connected functional module in the mounting box, and attaching a cover frame. This requires skilled staff. Building the mounting boxes with functional module into a prefabricated wall during fabrication of the wall can save a lot of time at the construction site and moreover does not require skilled or trained staff. However, a difficulty that can arise during manufacturing the prefabricated wall is aligning the mounting box in the mould before providing the wall material, which may also be time consuming. A not well aligned mounting box in a wall may afterwards increase the difficulty to finish the installation. For example, it may be difficult to provide a cover frame onto the functional module, when this is not well aligned. Moreover, it is not aesthetically attractive when the functional module appears to be not properly aligned in the wall.

### Summary of the invention

It is an object of embodiments of the present invention to provide an assembly tool and a method for aligning a mounting box for an electric or electronic functional module such as a socket, a switch, a network termination point, a USB connection and the like, in a mould before providing the wall material for manufacturing a prefabricated or prefab wall.

According to a first aspect, the invention provides an assembly tool for aligning a mounting box for an electric or electronic functional module such as a socket, a switch, a network termination point, a USB connection and the like in a mould for the manufacturing of a prefabricated or prefab wall. The assembly tool comprises an enclosure part for enclosing at least one mounting box and at least two protrusions fixed to and extending from the enclosure part, the protrusions being intended for leaning on a bottom of the mould and having a length equal to a predetermined distance between a lower part of the mould and a location of the at least one mounting box in the mould. In between neighbouring protrusions there is a predetermined distance for fitting cable trays of the mounting box and the provision of connection means, such as for example, a magnetic block, for connecting rigid conduits provided in these cable trays. These rigid conduits may be adapted for receiving cables for connection to a main electricity line.

An assembly tool according to embodiments of the invention allows a good alignment of the mounting box in the mould and prevents the mounting boxes from moving, turning, ... when pouring the wall material into the mould as the mounting boxes are fixed by the enclosure part. Furthermore, the distance between the mounting box and the lower part of the mould, which will thus also be the lower part of the prefabricated wall, is also fixed by the protrusions.

The assembly tool may comprise a handling bar extending perpendicular to a plane of the enclosure part or the protrusions. The handling bar makes the assembly tool easy to handle. According to embodiments of the invention, the handling bar may be fixed to one of the protrusions or may be fixed to an upper side of the enclosure part. Preferably, the handling bar is fixed to the middle one of the protrusions, because this prevents the assembly tool from falling when it is not held by a user. This makes the use of the assembly tool even easier, because a user does not have to pick it up from the floor when he needs it.

The handling bar can have a length such that a person working with it does not have to bend over to make sure that the mounting boxes are well aligned in the mould.

According to embodiments of the invention, the enclosure part may be adapted for enclosing more than one mounting box, and is, according to such embodiments, such that a predetermined distance between neighbouring mounting boxes is guaranteed.

The extremities of the protrusions furthest away from the enclosure part may, according to embodiments of the invention, be bended upwards. This makes sure that at all times good alignment of the mounting boxes is obtained, for example when the angle between the bottom of the mould and the lower part of the mould is not exactly 90° or when there is dirt at the edge between the bottom and the lower part of the mould.

The assembly tool may preferably be made of a non-magnetic material, such as for example inox. According to a second aspect, the invention provides a method for aligning a mounting box for an electric or electronic functional module such as a socket, a switch, a network termination point, a USB connection and the like in a mould during the manufacturing of a prefabricated or prefab wall. The method comprises:
- providing an assembly tool comprising an enclosure part for enclosing at least one mounting box and at least two protrusions fixed to and extending from the enclosure part, the protrusions being intended for leaning on a bottom of the mould and having a length equal to a predetermined distance between a lower part of the mould and a location of the at least one mounting box in the mould, there being a predetermined distance between neighbouring protrusions for fitting cable trays of the mounting box and connection means for rigid conduits in these cable trays,
- placing the assembly tool in the mould with the at least two protrusions leaning onto the bottom of the mould and with the extremities of the at least two protrusions touching a lower part of the mould,
- providing connection means for connecting the rigid conduits in the cable trays of the mounting box in between the at least two protrusions, the connection means thereby also touching the lower part of the mould, the lower part of the mould being intended for defining the lower part of the prefabricated wall,
- removing the assembly tool,
- providing at least one mounting box,
- connecting the rigid conduits to the connection means,
- placing the assembly tool over the at least one mounting box, and
- exerting a downward force to the assembly tool such that the at least one mounting box is fixed to the bottom of the mould.

According to embodiments of the invention, the at least one mounting box may comprise an edge provided with a double-sided tape and with alignment means. According to such embodiments, the method may furthermore comprise removing a cover from the double-sided tape. Removing the cover from the double-sided tape may be performed before providing the at least one mounting box in the mould or may be performed after providing the at least one mounting box in the mould but before exerting a downward force to the assembly tool.

The method may then furthermore comprise, by exerting the downward force to the assembly tool, removing the alignment means from the at least one mounting box by which the at least one mounting box is fixed against the bottom of the mould.

According to embodiments of the invention, providing at least one mounting box may comprise providing at least one mounting box comprising an electric or electronic functional module such as a socket, a switch, a network termination point, a USB connection and the like.

### Brief description of the drawings

It has to be noted that same reference signs in the different figures refer to same, similar or analogous elements.
Figures 1A to 1C illustrate different views of an assembly tool according to embodiments of the invention.
Figure 2 illustrates a top view of an assembly tool according to embodiments of the invention.
Figures 3A and 3B illustrate a preferred mounting box to be used with the assembly tool according to embodiments of the invention.
Figures 4 to 9 illustrate a method according to an embodiment of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides an assembly tool for aligning a mounting box for an electric or electronic functional module such as a socket, a switch, a network termination point, a USB connection and the like in a mould for the manufacturing of a prefabricated or prefab wall and a method for aligning a mounting box for an electric or electronic functional module such as a socket, a switch, a network termination point, a USB connection and the like in a mould during the manufacturing of a prefabricated or prefab wall.

The present invention will hereinafter be described by means of different embodiments. It has to be understood that these embodiments are only for the ease of understanding the invention and are not intended to limit the invention in any way.

According to a first aspect, the present invention provides an assembly tool for aligning a mounting box for an electric or electronic functional module such as a socket, a switch, a network termination point, a USB connection and the like in a mould before providing wall material, such as for example concrete, for the manufacturing of a prefabricated or prefab wall. The assembly tool comprises an enclosure part for enclosing at least one mounting box and further comprises at least two protrusions fixed to and extending from the enclosure part. The at least two protrusions are intended for leaning on a bottom of the mould and have a length equal to a predetermined distance between a lower part of the mould and a location of the at least one mounting box in the mould, there being a predetermined distance between neighbouring protrusions for fitting cable trays of the mounting box and for providing connection means for connecting rigid conduits which are provided in these cable trays.

An assembly tool according to embodiments of the invention allows a good alignment of the mounting box in the mould and prevents the mounting boxes from moving, turning, ... as the mounting boxes are fixed by the enclosure part and the distance from the lower part of the mould, which will be the lower part of the prefabricated wall, is also fixed by the protrusions.

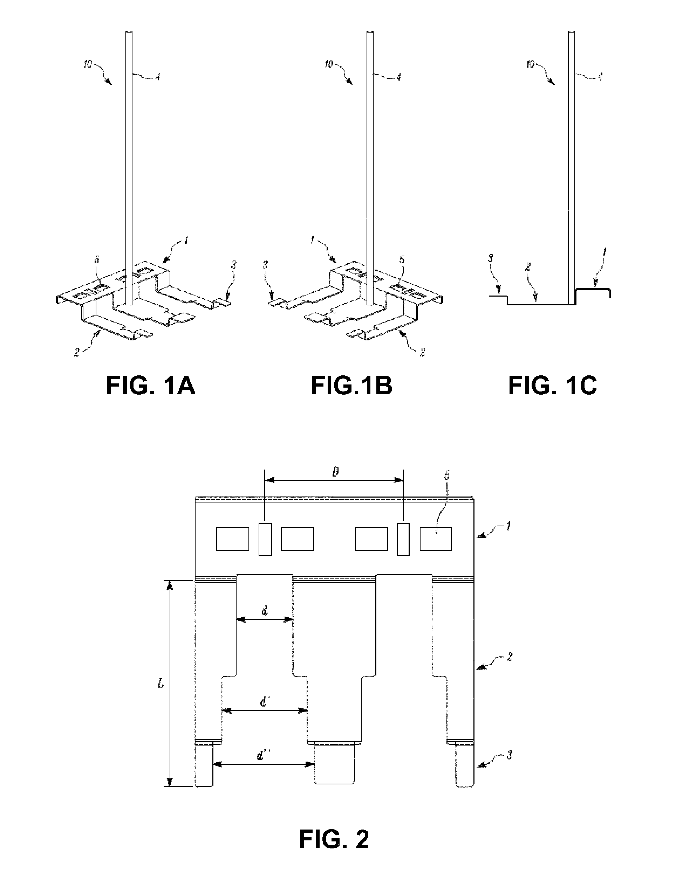

Figures 1A to 1C illustrate different views of an assembly tool 10 according to embodiments of the invention. The assembly tool 10 comprises an enclosure part 1 for enclosing at least one mounting box. The enclosure part 1 is formed by a part of the assembly tool of which the material the assembly tool is formed of is bended to form an open rectangle. With open rectangle is meant that the rectangle only has three closed sides and the fourth side is open so as to form kind of a cap that can be put over the at least one mounting box. The at least one mounting box (not shown in Figures 1A to 1C) may preferably comprise an electric or electronic functional module such as a socket, a switch, a network termination point, a USB connection and the like. An advantage of the mounting box already comprising such electric or electronic functional module is that the time necessary for finishing the installation at the constructions site can significantly be reduced and does not require skilled staff. However, it has to be understood that the invention is not limited to building in mounting boxes already comprising an electric or electronic functional module. The assembly tool according to embodiments of the invention can be used for building-in any mounting box, empty or not, in a prefabricated wall.

The assembly tool 10 furthermore comprises at least two protrusions 2 fixed to and extending from the enclosure part 1. The protrusions 2 are intended for leaning on a bottom of the mould. These protrusions 2 have a length L equal to a predetermined distance between a lower part of the mould and the location of the at least one mounting box in the mould, or in other words the required location of the at least one mounting box in the resulting prefabricated wall (see Figure 2 where a top view of the enclosure part 1 and the protrusions 2 is illustrated). In that way the required distance between the bottom of the mould, and thus the bottom of the prefabricated wall, and the at least one mounting box can be guaranteed. The length L of the protrusions 2 may thus vary depending on the required height, or distance from the floor, of the mounting box in the resulting prefabricated wall. This may further depend on the type of functional module that is or has to be provided in the mounting box.

The extremities 3 of the protrusions 2 furthest away from the enclosure part 1 may, according to embodiments of the invention, be bended upwards. This makes sure that at all times good alignment of the mounting boxes is obtained, for example when the angle between the bottom of the mould and the lower part of the mould is not exactly 90° or when there is dirt at the edge between the bottom and the lower part of the mould.

The number of protrusions 2 depends on the number of mounting boxes the enclosure part 1 is intended for. One mounting box requires two protrusions 2. Neighbouring mounting boxes share a protrusion 2 in between the mounting boxes. Hence, in general, the number of protrusions (P) 2 is equal to the number of mounting boxes (MB) plus one or # P = # MB + 1. In the example given in Figures 1A to 1C and 2, all protrusions 2 substantially have an equal length L. However, this is not necessarily so. When the two outer protrusions have a same length L, i.e. the length L that defines the location of the mounting boxes in the resulting prefabricated wall, the other protrusions 2 may have a shorter length as they do not need to touch the lower part of the mould.

In between neighbouring protrusions 2, there is a predetermined distance d,d',d" such that there is enough space for cable trays provided to the at least one mounting box and for connection means for these cable trays. The cable trays are for receiving rigid conduits for receiving cables for connection to a main electricity line. The distance d,d',d" between neighbouring protrusions 2 can be equal over the total length L of the protrusions 2 or can, as illustrated in Figure 2, be different along the length L of the protrusions 2. Whether this distance d,d',d" is equal over the total length L or not depends on the kind of cable trays and cable tray connections that are used (see further). Hence, the distance d,d',d" in between neighbouring protrusions may vary depending on the kind of cable trays and the kind of connection means that are used.

The height of the enclosure part 1 may depend on the type, and thus the height, of the mounting box that is used. The enclosure part 1 may be adapted for enclosing single, dual or any other type of mounting box known by a person skilled in the art. The enclosure part 1 may be suitable for comprising at least one mounting box, but may also be adapted to comprise more than one mounting box. For example, in the embodiment illustrated in Figures 1A to 1C and 2 the enclosure part 1 is adapted to enclose two dual mounting boxes. Consequently, the assembly tool 1 as illustrated in Figures 1A to 1C and 2 comprises three protrusions 2. According to embodiments of the invention where the assembly tool 10 is adapted to enclose more than one mounting box, the enclosure part 1 is such that a predetermined distance D between neighbouring mounting boxes is guaranteed. This is illustrated in Figure 2 where a top view of the enclosure part 1 and the protrusions 2 is illustrated. This distance D is indicated as the distance between the middle of the neighbouring mounting boxes. For guaranteeing the predetermined distance D between neighbouring mounting boxes, the enclosure part 1 may be provided with holes 5 in which parts of the closing part of the mounting box (see further) fit. The distance D may vary depending on the required distance in between neighbouring mounting boxes.

The assembly tool 10 may furthermore comprise a handling bar 4 which makes the assembly tool 10 easy to handle. This handling bar 4 extends perpendicular to a plane of the enclosure part 1 or the protrusions 2. According to embodiments of the invention and as illustrated in Figures 1A to 1C, the handling bar 4 may be fixed to one of the protrusions 2. Preferably, the handling bar 4 is fixed to the middle one of the protrusions 2. An advantage hereof is that, in that case, when a user is not holding the assembly tool, it does not fall onto the floor. This makes it easy for the user when he again needs it, he does not have to pick it up from the floor. However, it has to be understood that this is not intended to limit the invention in any way, the handling bar 4 may be fixed to any of the protrusions 2. According to other embodiments, the handling bar 4 may also be fixed to an upper side of the enclosure part 1. The handling bar 4 may have a length adapted such that a person working with it does not have to bend over too when using the assembly tool according to the invention.

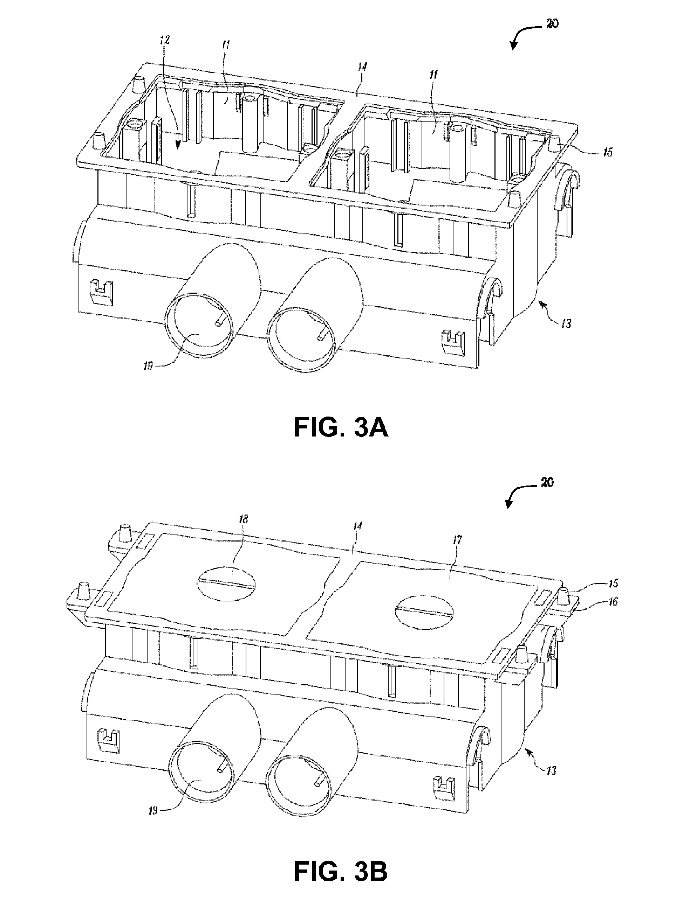

As already described, an assembly tool 10 according to embodiments of the invention can be used with any suitable mounting box known by a person skilled in the art. Preferably but not limited to, mounting boxes 20 as illustrated in Figures 3A and 3B may be used. The mounting box 20 comprises two tubular parts 11. The tubular parts 11 have an open front end 12 and an open back end 13. The terms "front" and "back" refer to the front side and back side when the mounting box 20 is built into a vertical prefabricated wall. Hereby the front side is visible at the surface of the wall, when placed at the construction side, while the back side is located in the wall. The open front end 12 of the tubular parts 11 is bordered by a small edge 14. This small edge 14 may be provided with a double-sided tape (not visible in the drawing) for fixing the mounting box 20 to the bottom of the mould, such that, during pouring the wall material into the mould during the manufacturing of the wall, the mounting box 20 does not move and stays well-aligned in the mould. The double-sided tape may be any tape known by a person skilled in the art and suitable for, at one side, being fixed to the material of the mould and, on the other side, being fixed to the material of the mounting box 20, such as for example a vinyl tape, an acryl tape, a butyl tape or the like.

The mounting box 20 furthermore comprises alignment means 15 for properly aligning the mounting box 20 before securing it to the bottom of the mould. The alignment means 15 may, for example, be alignment feet or alignment protrusions which are provided on the edge 14 of the mounting box 20 and extend in a direction substantially perpendicular to and away from that edge 14 (see Figure 3A) or may, as illustrated in Figure 3B, be provided on protrusions 16 extending from a side of the edge 14 of the mounting box 20 in a direction substantially parallel with the plane of the edge 14. The alignment means 15 comprises a weakened boundary.

Electric or electronic functional modules such as a socket, a switch, a network termination point, a USB connection and the like may be provided into the tubular parts 11 of the mounting box 20 before the mounting box 20 is provided into the mould, and thus before the mounting box 20 is built into a prefabricated wall.

The front open end 12 of the tubular parts 11 may be closed off with a cover 17, as illustrated in Figure 3B. This cover 17 may be provided with cutouts 18 that form a grip in which can fit, for example, a tool for easy removal of the cover 17. This cover 17 prevents dirt, liquids, wall material and the like to come into the mounting box 20 during the manufacturing process of the prefabricated wall. When the mounting box 20 is provided into the mould, the cover 17 is facing the bottom of the mould such that, when the prefabricated wall is removed from the mould and after placement of the wall at the construction site, the cover 17 can be removed, thereby revealing the electric or electronic functional module.

The open back end 13 of the mounting box is closed off with a closing part (not shown in the drawings).

The mounting box 20 may furthermore comprise two cable trays 19. The cable trays 19 are typically intended for receiving rigid conduits 25 to receive cables for connection to a main electricity line.

According to a second aspect, the present invention also provides a method for aligning a mounting box for an electric or electronic functional module such as a socket, a switch, a network termination point, a USB connection and the like, in a mould for the manufacturing of a prefabricated or prefab wall.

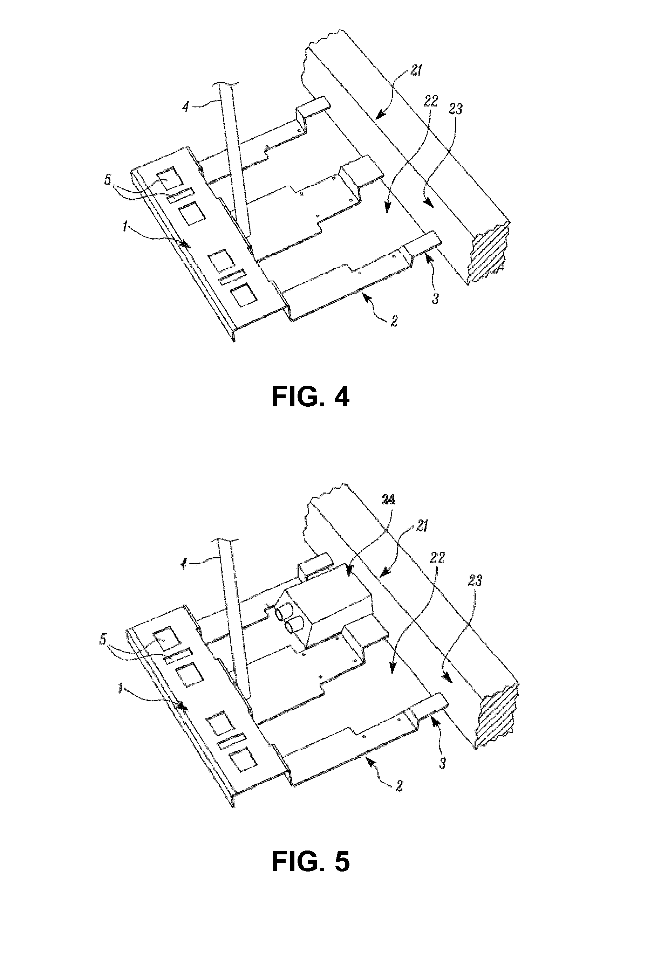

In a first step, which is illustrated in Figure 4, an assembly tool 10 according to embodiments of the invention and as described in the embodiments above is provided. The assembly tool 10 is placed into the mould 21 with the protrusions 2 leaning onto the bottom 22 of the mould 21 and with the extremities 3 furthest away from the enclosure part 1 touching a lower part 23 of the mould 21. According to embodiments of the invention, at that time lines may be provided to the bottom of the mould as to where the cable trays and the connection means have to be placed. However, according to other embodiments, this step may be omitted.

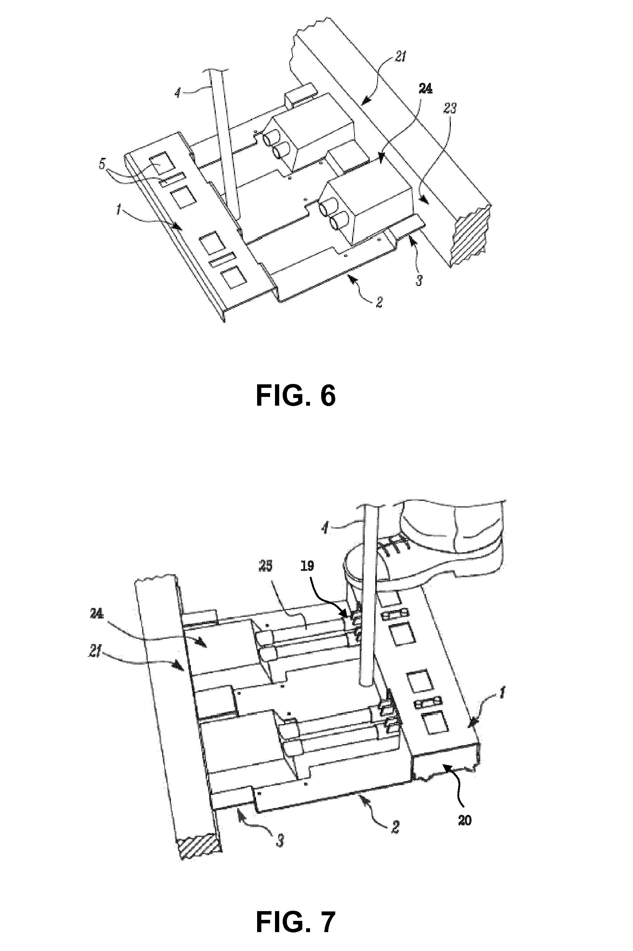

Thereafter, connection means 24 is provided for connecting the rigid 25 conduits in the cable trays 19 of the at least one mounting box 20. The connection means 24 may be any suitable connection means known by a person skilled in the art and may, for example, be a magnetic block as illustrated in Figure 5 and Figure 6.

In a next step, the assembly tool 10 is removed and at least one mounting box 20 is provided. The rigid conduits 25 in the cable trays 19 of the at least one mounting box 20 are connected to the magnetic block 24. In that way the mounting box 20 can further be fixed to the bottom 22 of the mould 21. The rigid conduits 25 may, for example, be connected to the magnetic block 24 in such a way that they push the mounting box 20 against the bottom 22 of the mould 21, thereby ensuring a stable positioning of the mounting boxes 20 in the mould 21. The at least one mounting box 20 may be any mounting box known by a person skilled in the art and may preferably be a mounting box as described above and as illustrated in Figures 3A and 3B. In case the at least one mounting box 20 is one as illustrated in Figures 3A and 3B, a cover of the double-sided tape may be removed before placing the at least one mounting box 20 in the mould 21. Because of the presence of the alignment means 15, the double-sided tape does not touch the bottom 22 of the mould 21 when placing the at least one mounting box 20 into the mould 21.

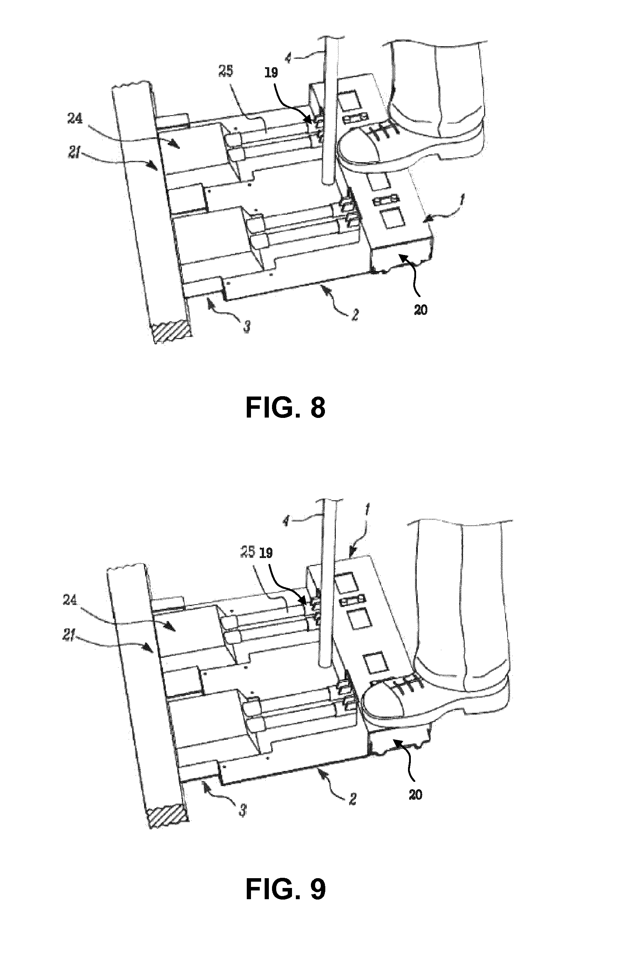

Next steps in the method are illustrated in Figures 7 to 9. The rigid conduits 25 are connected to the connection means 24. These rigid conduits 25 are typically intended for receiving cables for connection to a main electricity line. Then, the enclosure part 1 of the assembly tool 10 is placed over the at least one mounting box 20, whereby the connection means are located in between the protrusions 2. After that, a downward force is exerted onto the assembly tool 10, for example, by a foot of a user, such that the alignment means 15 are removed and the at least one mounting box 20 is fixed to the bottom 22 of the mould 21 by means of the double-sided tape.

It has to be noted that, according to embodiments of the invention, the cover of the double-sided tape may also, instead of being removed before placing the at least one mounting box 20 into the mould 21, be removed after the at least one mounting box 20 has been placed into the mould 21 but before a downward force is applied to the assembly tool 10.

In that way, the at least one mounting box 20 is well-aligned in the mould 20 and will not move anymore when the wall material, such as e.g. concrete, is poured into the mould 20.

## Claims

1. An assembly tool (10) for aligning a mounting box (20) in a mould, the assembly tool (10) comprising an enclosure part (1) for enclosing at least one mounting box (20) and at least two protrusions (2) fixed to and extending from the enclosure part (1), the protrusions (2) being intended for leaning on a bottom (22) of the mould (21) and having a length (L) equal to a predetermined distance between a lower part (23) of the mould (21) and a location of the at least one mounting box (20) in the mould (21), there being a predetermined distance (d,d',d") between neighbouring protrusions (2) for fitting cable trays (19) of the mounting box (20) and connection means (24) for connecting rigid conduits (25) which are provided in these cable trays (19).

2. Assembly tool (10) according to claim 1, furthermore comprising a handling bar (4) extending perpendicular to a plane of the enclosure part (1) or the protrusions (2).

3. Assembly tool (10) according to claim 2, wherein the handling bar (4) is fixed to one of the protrusions (2).

4. Assembly tool (10) according to any of the previous claims, the enclosure part (1) being adapted for enclosing more than one mounting box (20), wherein the enclosure part (1) is such that a predetermined distance (D) between neighbouring mounting boxes (20) is guaranteed.

5. Assembly tool (10) according to any of the previous claims, the protrusions (2) having extremities (3), wherein the extremities (3) of the protrusions (2) furthest away from the enclosure part (1) are bended upwards.

6. Assembly tool (10) according to any of the previous claims, wherein the assembly tool (10) is made of a non-magnetic material.

7. A method for aligning a mounting box (20) in a mould (21), the method comprising:
- providing an assembly tool (10) according to any of the previous claims,
- placing the assembly tool (10) in the mould (21) with the at least two protrusions (2) leaning onto the bottom (22) of the mould (21) and with the extremities (3) of the at least two protrusions (2) touching a lower part (23) of the mould (21),
- providing connection means (24) for connecting the rigid conduits (25) in the cable trays (19) of the mounting box (20) in between the at least two protrusions (2), the connection means (24) thereby also touching the lower part (23) of the mould (21),
- removing the assembly tool (10),
- providing at least one mounting box (20) provided with rigid conduits (25) in cable trays (19) in the mould (21),
- connecting the rigid conduits (25) to the connection means (24),
- placing the assembly tool (10) over the at least one mounting box (20), and
- exerting a downward force to the assembly tool (10) such that the at least one mounting box (20) is fixed to the bottom (22) of the mould (21).

8. Method according to claim 7, the at least one mounting box (20) comprising an edge (14) provided with a double-sided tape and with alignment means (15), wherein the method furthermore comprises removing a cover from the double-sided tape.

9. Method according to claim 7, wherein removing the cover from the double-sided tape is performed before providing the at least one mounting box (20) in the mould (21).

10. Method according to claim 7, wherein removing the cover from the double-sided tape is performed after providing the at least one mounting box (20) in the mould (21) but before exerting a downward force to the assembly tool (10).

11. Method according to any of claims 7 to 10, the method furthermore comprises, by exerting the downward force to the assembly tool (10), removing the alignment means from the at least one mounting box (20).

12. Method according to any claims 7 to 11, wherein providing at least one mounting box (20) comprises providing at least one mounting box (20) comprising an electric or electronic functional module.
